# EUROPEAN PATENT APPLICATION

(11) **EP 3 015 979 A1**
(43) Date of publication of application: **04.05.2016**
(21) Application number: 15191823.2
(22) Date of filing: 28.10.2015
(51) Int. Cl.: G06F 9/44, G05B 19/05

(54) **INFORMATION PROCESSING APPARATUS, INFORMATION PROCESSING METHOD, INFORMATION PROCESSING PROGRAM, AND STORAGE MEDIUM**

(30) Priority: 29.10.2014 JP 2014220871
(71) Applicant: OMRON CORPORATION, Kyoto, Kyoto 600-8530 (JP)
(72) Inventor: IWAMURA, Shintaro, Kyoto, Kyoto 600-8530 (JP)
(74) Representative: Horn Kleimann Waitzhofer Patentanwälte PartG mbB

(57) **Abstract**

A support apparatus for generating a project including data to be used in a controller allows a user to easily retrieve target data for editing or for other processing. A support apparatus (100) retrieves a target group name matching an input character from the names of hierarchically managed groups into which data has been classified, and displays the retrieved target group name together with the name of a parent group for the group with the retrieved target group name.

## Description

### FIELD

The present invention relates to an information processing apparatus that is connected to a controller for controlling the operations of machines or devices, and generates projects including data to be used in the controller.

### BACKGROUND

System development support apparatuses support development of control systems including industrial controllers, such as programmable logic controllers (PLCs).

For example, Patent Literature 1 describes a technique for managing files storing subprograms that are associated with a sequence program written using a flowchart. This technique automatically assigns file names to subprograms and automatically creates a directory indicating connections between the subprograms.

### CITATION LIST

### PATENT LITERATURE

Patent Literature 1: Japanese Unexamined Patent Application Publication No. 7-234711 (published on September 5, 1995)

### SUMMARY

### TECHNICAL PROBLEM

However, such techniques known in the art may not allow easy retrieval of editing target data from data used in the controller.

For example, one technique for developing and managing a program using a flowchart includes generating process steps (sections) as subprograms, which are implemented in units of processes included in a main program describing the entire procedure, and managing the subprograms in a manner hierarchically associated with the main program. The technique using a flowchart manages the hierarchy by assigning file names to sections (subprograms) and creating a directory indicating connections between the subprograms having the file names.

For a large project file including a plurality of programs generated by a program developer (user), the user may expand and scroll the tree (hierarchy) to eventually retrieve an intended subprogram after retrieving a program containing the intended subprogram from the project. This operation takes lengthy time.

In addition, the user may vaguely remember the name of an intended subprogram but may not remember its precise location in the tree. In this case, retrieving the intended subprogram can be difficult. Further, retrieving a subprogram across programs will involve repeated expanding and scrolling of the tree. This may cause user inconvenience.

One or more aspects of the present invention are directed to an information processing apparatus, an information processing method, and an information processing program that allow a user to easily retrieve target data for editing from an information processing apparatus for generating a project including editing target data used in a controller.

### SOLUTION TO PROBLEM

A first aspect of the invention provides an information processing apparatus for generating a project including data to be used in a controller. The data is classified into a plurality of groups that are managed in a hierarchy. The apparatus includes a search unit, a first display control unit, and a second display control unit. The search unit retrieves at least one target group name including an input character. The target group name is a name of one of the plurality of groups. The first display control unit displays a first display screen including the at least one target group name retrieved by the search unit and a name of a parent group for the target group name. The parent group is located one-level higher in the hierarchy than a group with the target group name. The parent group contains the group with the target group name. The second display control unit displays, when receiving an instruction to select one of the at least one target group name displayed by the first display control unit, a second display screen allowing editing of data included in a group with the selected target group name.

The information processing apparatus with the above-described structure searches the names of the groups that are managed hierarchically, into which data used by the controller has been classified. The information processing apparatus displays, when receiving an operation to select one of the target group names appearing as the search results in the display screen, a display screen allowing editing of target data included in the group with the selected target group name. The editing of the data used by the controller includes, for example, designing a device or designing a program for configuring the control system including the controller. The information processing apparatus allows the user to easily retrieve target data for editing or for other processing from the data used by the controller. In other words, the user can promptly access the display screen allowing editing of the editing target data or other data with a simple operation. The information processing apparatus thus improves the user's work efficiency in generating projects. The information processing apparatus displays the target group name in correspondence with the name of its parent group in the display screen. This allows the user to easily retrieve an intended target group name and to easily check the parent group containing the group with the retrieved group name. When, for example, the group name of the target group for editing is similar to the group name of another group, the user can check the parent group for the target group and the parent group for the other group, and thus can avoid mistakenly selecting the other group.

In one or more embodiments, the information processing apparatus further includes a history management unit that stores a group name of the group including the data into a storage unit in response to an operation to close the second display screen allowing editing of data. When the search unit retrieves a plurality of target group names, the first display control unit displays the plurality of group names retrieved by the search unit in such a manner that a predetermined number of latest group names stored into the storage unit by the history management unit are displayed with a higher priority than other target group names.

The information processing apparatus with the above-described structure displays the plurality of target group names retrieved by the search unit in such a manner that a predetermined number of latest target group names stored into the storage unit by the history management unit with a higher priority than other target group names. The predetermined number of (e.g., ten) latest target group names stored into the storage unit by the history management unit are the group names of groups including editable data in the most recent ten display screens for which an operation to close the screen has been performed. In other words, the group names of the predetermined number of latest group names stored into the storage unit by the history management unit may be the group names of groups including data that is likely to have been edited by the user before a predetermined number of (e.g., ten) most recent editing operations performed by the user. The user can thus more easily retrieve the group names of groups including data edited before the predetermined number of editing operations, and can improve the work efficiency in designing devices and programs.

In one or more embodiments, the first display control unit displays, together with the target group name, a name of a sibling group that is located immediately below the parent group and is other than the group with the target group name.

The information processing apparatus with the above-described structure displays the sibling group name, together with the target group name. The information processing apparatus thus provides the sibling group name to the user, together with the target group name, and allows the user to easily check the group name associated with the target group name.

In one or more embodiments, the second display control unit displays, when receiving an instruction to select a name of the sibling group displayed on the first display screen, a second display screen allowing editing of data included in the group with the selected sibling group name.

The information processing apparatus with the above-described structure displays, when an operation is performed to select the name of the sibling group, an editing image for editing data included in the group with the selected sibling group in the display screen. The information processing apparatus allows the user to promptly access the editing image for editing data (data included in the sibling group) associated with intended data (data included in the group with the target group name) with a simple operation, and improves the user's work efficiency in generating projects.

A second aspect of the invention provides an information processing method implemented by an information processing apparatus for generating a project including data to be used in a controller. The data is classified into a plurality of groups that are managed in a hierarchy. The method includes a search process, a first display control process, and a second display control process. The search process includes retrieving at least one target group name including an input character. The target group name is a name of one of the plurality of groups. The first display control process includes displaying a first display screen including the at least one target group name retrieved in the search process and a name of a parent group for the target group name. The parent group is located one-level higher in the hierarchy than the group with the target group name. The parent group contains the group with the target group name. The second display control process includes displaying, when receiving an instruction to select one of the at least one target group name displayed in the first display control process, a second display screen allowing editing of data included in a group with the selected target group name.

The above information processing method allows searching the names of the groups that are managed hierarchically, into which data used by the controller has been classified. The method includes displaying, when receiving an operation to select one of the target group names appearing as the search results in the display screen, a display screen allowing editing of target data included in the group with the selected target group name. This method allows the user to easily retrieve target data for editing or for other processing from the data used in the controller.

### ADVANTAGEOUS EFFECTS

The information processing apparatus according to one embodiment of the present invention for generating projects including data used in the controller allows the user to easily retrieve target data for editing.

### BRIEF DESCRIPTION OF THE DRAWINGS

Fig. 1 is a block diagram showing the main components of a support apparatus according to a first embodiment of the present invention.
Fig. 2 is a diagram showing the overview of a control system according to embodiments of the present invention.
Fig. 3 is a diagram describing a main window in one example appearing on a display of the support apparatus shown in Fig. 1.
Fig. 4 is a diagram describing search results in one example appearing in a search window on the display of the support apparatus shown in Fig. 1.
Fig. 5 is a diagram describing a main window in one example appearing on the display of the support apparatus shown in Fig. 1 when a user selects Section in the search window shown in Fig. 4.
Fig. 6 is a diagram describing search results in one example appearing in the search window on the display of the support apparatus shown in Fig. 1, different from the search window shown in Fig. 4.
Fig. 7 is a diagram describing a main window in one example appearing on the display of the support apparatus shown in Fig. 1 when the user selects Variable in the search window shown in the Fig. 6.
Fig. 8 is a flowchart showing the processing performed by the support apparatus shown in Fig. 1.
Fig. 9 is a block diagram showing the main components of the support apparatus according to a second embodiment of the present invention.
Fig. 10 is a diagram describing search results in one example appearing in the search window on the display of the support apparatus shown in Fig. 9.
Fig. 11 is a block diagram showing the main components of the support apparatus according to a third embodiment of the present invention.
Fig. 12 is a diagram describing search results in one example appearing the search window on the display of the support apparatus shown in Fig. 11.
Fig. 13 is a block diagram showing the configuration of a computer that can function as the support apparatus.

### DETAILED DESCRIPTION

### First embodiment

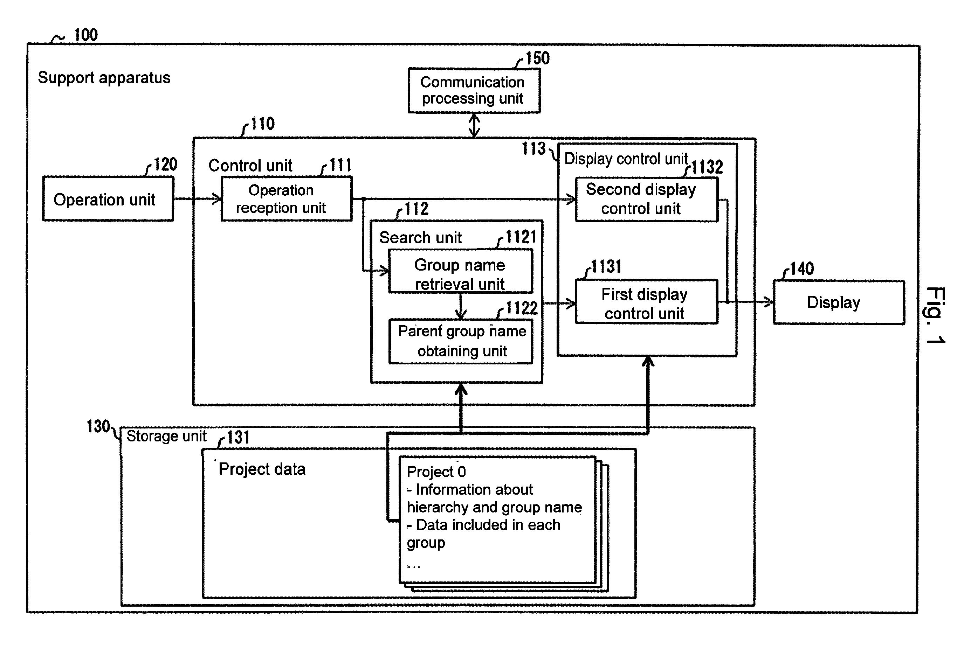

A first embodiment of the present invention will now be described in detail with reference to Fig. 1 to Fig. 8. The overview of a control system 1 will be provided for easier understanding of a support apparatus 100 (information processing apparatus) according to one embodiment of the present invention.

### Control System Overview

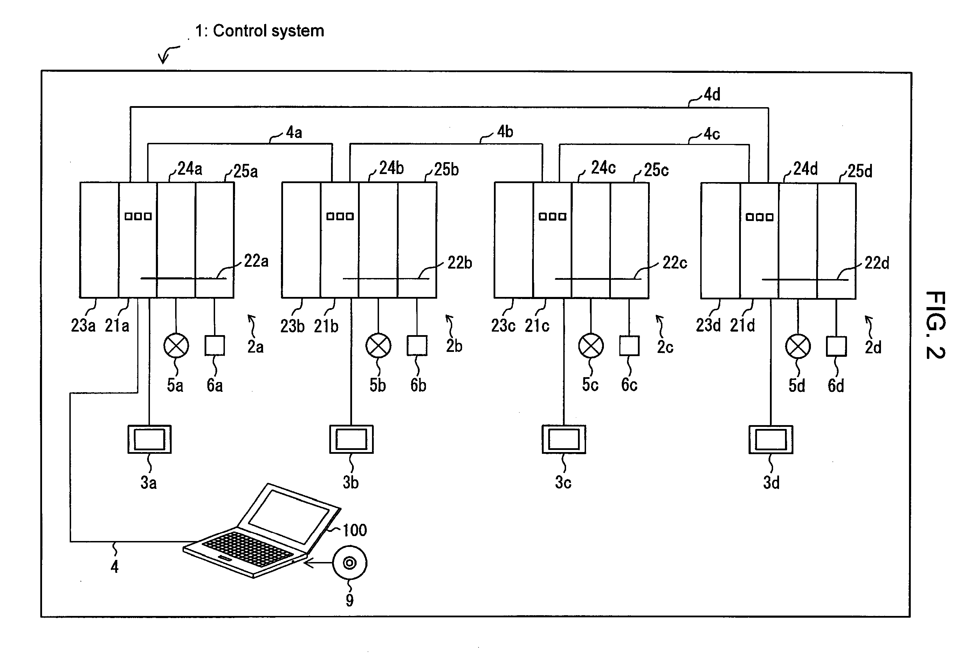

The overview of the control system 1 according to the present embodiment will now be provided with reference to Fig. 2. Fig. 2 is a diagram showing the overview of the control system 1.

The control system 1 includes a plurality of programmable logic controllers (PLCs) 2 (PLC 2a, PLC 2b, PLC 2c, and PLC 2d) and the support apparatus 100. The PLC 2a, PLC 2b, PLC 2c, and PLC 2d and the support apparatus 100 are connected to each other with EtherCAT (registered trademark) to allow mutual communication. The PLCs 2 may be labeled with letters including a, b, c, and d to identify each PLC 2. For example, the PLCs 2 may be referred to as PLC 2a, PLC 2b, PLC 2c, and PLC 2d. When such identification is not needed, the PLCs 2 are simply written as PLC(s) 2. The same applies to CPU units 21, system buses 22, power supply units 23, Input-Output (IO) units 24 and 25, monitor devices 3, detection sensors 5, and relays 6. These components may be labeled with letters including a, b, c, and d for identification. When no identification is needed, the letters are not used.

Each PLC 2 typically includes a CPU unit 21, a power supply unit 23, an IO unit 24, and an IO unit 25. The CPU unit 21 executes programs. The power supply unit 23 supplies power to the CPU unit 21 and other units. The IO unit 24 and the IO unit 25 receive and output signals to and from fields. For example, the IO unit 24 receives an input signal from the detection sensor 5, which is a field device. The IO unit 25 drives the relay 6, which is a field device, in accordance with program execution in the CPU unit 21. The IO units 24 and 25 are connected to the CPU unit 21 with the system bus 22.

Each monitor device 3 includes a display, an operation unit, a communication unit that communicates with the corresponding one of the CPU units 21a to 21d, and a control unit that controls these components. The operation unit of the monitor device 3 is operated to change the settings of the PLC 2. The display of each monitor device 3 displays predetermined information associated with the corresponding PLC 2.

The support apparatus 100 generates programs to be executed in the PLCs 2 and also generates setup information for the PLCs. The support apparatus 100 also monitors the operating state of the PLCs 2 and their various data values. The support apparatus 100 may further be capable of debugging and simulation to support the user in generating executable programs. The support apparatus 100 may be connected to the CPU unit 21 of each PLC 2 with a connection cable 4. The functions of the support apparatus 100 described above may be achieved by a personal computer that executes programs (execution programs) stored in, for example, a DVD-ROM 9. The functions of the support apparatus 100 described above may also be achieved by a personal computer that downloads programs similar to the programs stored in the DVD-ROM 9 from an upper host computer through a network and executes the programs.

Data managed by the support apparatus 100 including programs executed in the PLCs and setup information will now be described. Data sets for configuring the programs and the setup information will be collectively referred to as projects.

### Overview of Data Edited by User of Support Apparatus

The support apparatus 100 hierarchically manages data to be used in designing devices for configuring the control system 1 and data to be used in designing programs for configuring the control system 1 by classifying the data into a plurality of groups and assigning group names (design category names) to the plurality of groups.

For example, the support apparatus 100 manages a program to be executed in the PLCs 2 by hierarchically connecting its subprograms, which describe process steps (sections) executable in units of processes, to a main program, which describes the entire program procedure. The support apparatus 100 assigns the design category names (section names) to sections (subprograms), and further creates a directory indicating connections between the subprograms with the design category names to manage the hierarchy.

The PLCs 2 comply with, for example, the International Electrotechnical Commission (IEC) 61131-3. Under IEC61131-3, variables (signal names) can have types and addresses defined as their attributes. Programming complying with IEC61131-3 basically uses variables. IEC61131-3 defines the variables as the names assigned to targets (memory devices) for storing data. Under IEC61131-3, variables that need absolute addresses, such as externally input or output variables, use designated addresses, whereas variables that need no absolute addresses, such as variables other than externally input or output variables, use automatically assigned addresses.

The variables include global variables and local variables. A global variable is referenced by a plurality of programs. A local variable is referenced by a single program.

Programs are a generic name for user programs, motion computing programs, and sequence instruction computing programs. A user program is generated in accordance with a user's control target (e.g., a target line and a target process). To generate a user program, the support apparatus 100 compiles a ladder program (source program), which is written with the ladder logic (ladder language). The ladder logic, which is a technique for describing a logic circuit, is a programming language used by many PLCs. A user program is generated, for example, in the format of an object program executable by a microprocessor included in the CPU unit 21. A motion computing program is executed in accordance with an instruction provided from a user program. Upon every execution, the motion computing program calculates a command value to be output to a motor driver, such as a servo motor driver and a pulse motor driver. A sequence instruction computing program is called when a predetermined sequence instruction used in a user program is executed. The program then enables the processing corresponding to the instruction.

The support apparatus 100 hierarchically manages data to be used in designing programs for configuring the control system 1 by classifying the data into a plurality of groups in a hierarchy, in which groups called sections (subprograms) are located at the lowest level. More specifically, the support apparatus 100 manages each program as a group containing a plurality of sections and located immediately above these sections. The support apparatus 100 also manages each project as a group containing a plurality of programs and located immediately above these programs. In this manner, the support apparatus 100 manages data to be used in designing programs for configuring the control system 1 by classifying the data into a plurality of groups in a hierarchy. The support apparatus 100 also manages data to be used in designing devices for configuring the control system 1 by classifying the data into a plurality of groups in a hierarchy. The data to be used in designing devices refers to design data for various devices controllable by the PLCs 2. For a communicator device, the design data may include the communication conditions. For a device including a motor, the design data may include the operating conditions of the motor, such as the rotational angle. The data is managed using a plurality of groups in the manner described below in detail.

The support apparatus 100, which hierarchically manages programs executable in the PLCs 2 and setup information, will now be described with reference to Fig. 1.

### Support Apparatus Overview

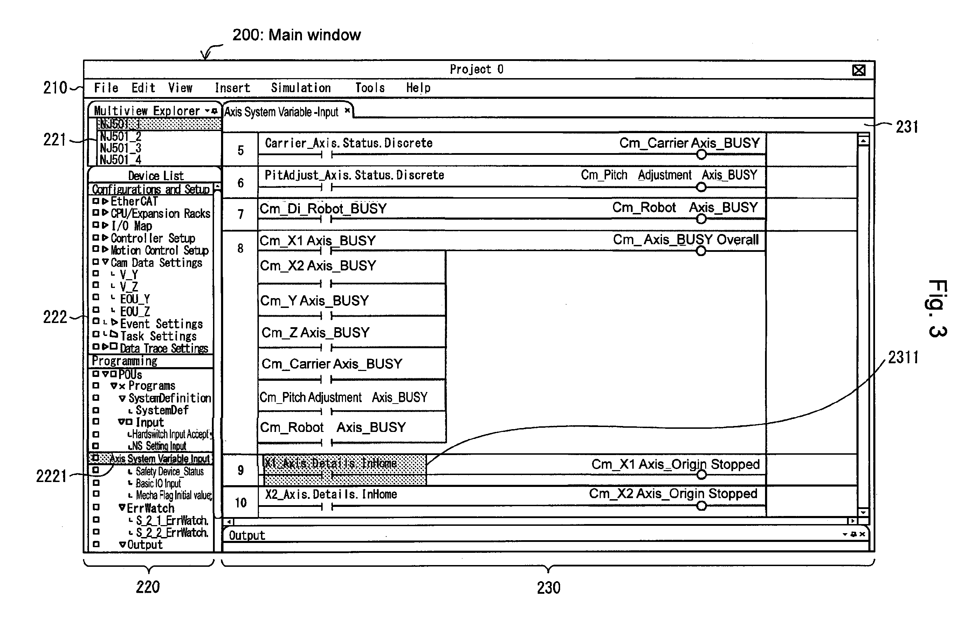

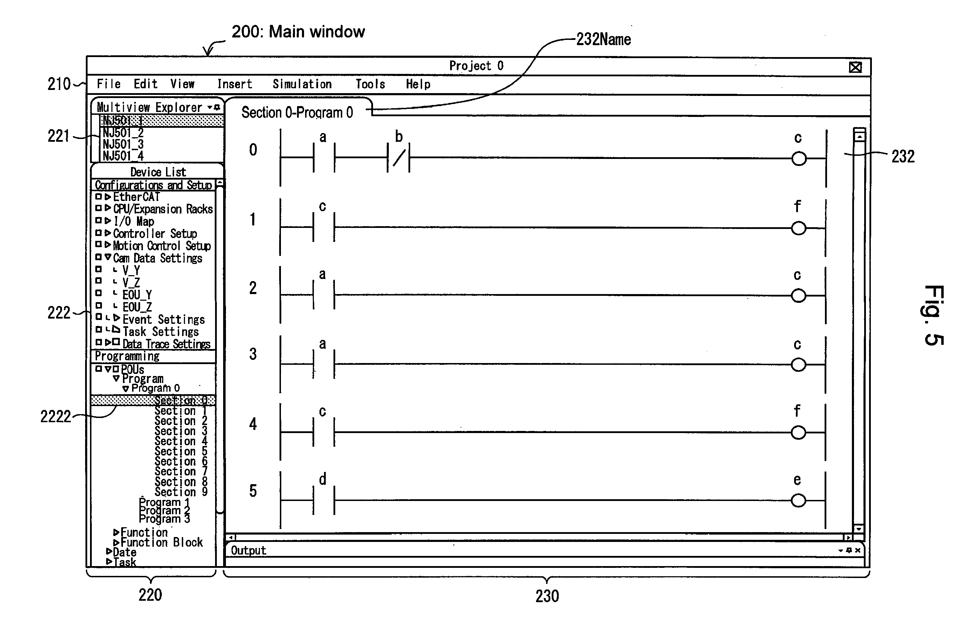

The overview of the support apparatus 100 will now be provided. The support apparatus 100 (information processing apparatus) is an information processing apparatus for generates projects including data used in the PLCs 2 (controllers). The data is classified into a plurality of groups that are managed hierarchically. The support apparatus 100 includes a group name retrieval unit 1121, a first display control unit 1131, and a second display control unit 1132. The group name retrieval unit 1121 retrieves one or more target group names including an input character (or input characters). Each target group name is the name of one of the plurality of groups. The first display control unit 1131 displays a display screen including the target group names retrieved by the group name retrieval unit 1121 and the names of parent groups containing the groups with the target group names and located one-level higher than (or immediately above) the groups with the target group names. When receiving an instruction to select one of the target group names displayed by the first display control unit 1131, the second display control unit 1132 displays a display screen allowing editing of data included in the group with the selected group name. The display screen appearing as controlled by the second display control unit 1132 in response to the instruction to select one of the target group names displayed by the first display control unit 1131 may also be referred to as an editing image, which is for example an editing image 232 shown in Fig. 5. The data used in the PLCs 2 may be, for example, an individual ladder program. In this case, the groups (design categories) refer to sections (subprograms) including the ladder program. As shown in Fig. 3, the data used in the PLCs 2 includes Carrier Axis.Status.Discrete, PitAdjust_Axis.Status.Discrete, and Cm_Di_Robot_BUSY, which are contained in the group (design category) named Axis System Variable. The data is used in designing devices.

In the support apparatus 100 with the above structure, the group name retrieval unit 1121 searches the names of the hierarchically managed groups, into which the data used in the PLCs 2 has been classified. When receiving an operation to select one of the target group names on a display 140 appearing as the search results together with the names of their parent groups, the second display control unit 1132 in the support apparatus 100 displays the editing image 232 (refer to Fig. 5), which is used for editing the data included in the group with the selected target group name. The support apparatus 100 thus allows the user to easily retrieve intended data (e.g., target data for editing) from the data used in the PLCs 2. The support apparatus 100 allows the user to promptly access the editing image for editing intended data with a simple operation, and improves the user's work efficiency in generating projects.

The first display control unit 1131 in the support apparatus 100 displays the target group names in correspondence with their parent group names on the display 140. This allows the user to easily retrieve an intended target group name and also to easily check the parent group containing the group with the retrieved target group name. When, for example, the group name of the target group for editing is similar to the group name of another group, the user can check the parent group for the target group and the parent group for the other group, and thus can avoid mistakenly selecting the other group.

### Detailed Structure of Support Apparatus

Fig. 1 is a block diagram showing the main components of the support apparatus 100. The support apparatus 100 includes a control unit 110, which centrally controls the functions of the support apparatus 100, an operation unit 120, a storage unit 130, which stores data used in the support apparatus 100, the display 140, and a communication processing unit 150. To simplify the drawing, components that are not directly pertinent to the present embodiment (e.g., components of the support apparatus 100 responsible for monitoring the operations of the PLCs 2 or for debugging and simulation to support a user in generating executable programs) are not shown in this block diagram, and will not be described. The support apparatus 100 may include such components in actual implementation.

The operation unit 120 is an input device that receives an input operation performed by the user of the support apparatus 100 and outputs the received input to the control unit 110. The operation unit 120 may be, for example, a keyboard or a mouse. The control unit 110 (specifically, an operation reception unit 111) receives a user instruction corresponding to the operation received by the operation unit 120. The display 140 displays an image as controlled by the control unit 110 (specifically, a display control unit 113). The communication processing unit 150 is an interface that allows communication with the PLCs 2 and other units.

### Structure of Control Unit

The control unit 110 shown in the figure includes functional blocks including the operation reception unit 111, a search unit 112, and the display control unit 113. Each functional block included in the control unit 110 may be achieved by, for example, a central processing unit (CPU) that reads a program stored in a memory device (the storage unit 130), such as a read-only memory (ROM) or a non-volatile random access memory (NVRAM), into a random-access memory (RAM) (not shown) and executes the program. This will be described in detail below.

The operation reception unit 111 receives an input signal corresponding to a user input received by the operation unit 120, and identifies the operation performed by the user based on the input signal. The operation reception unit 111 outputs an instruction corresponding to the user operation to either the search unit 112 or the display control unit 113 or to both.

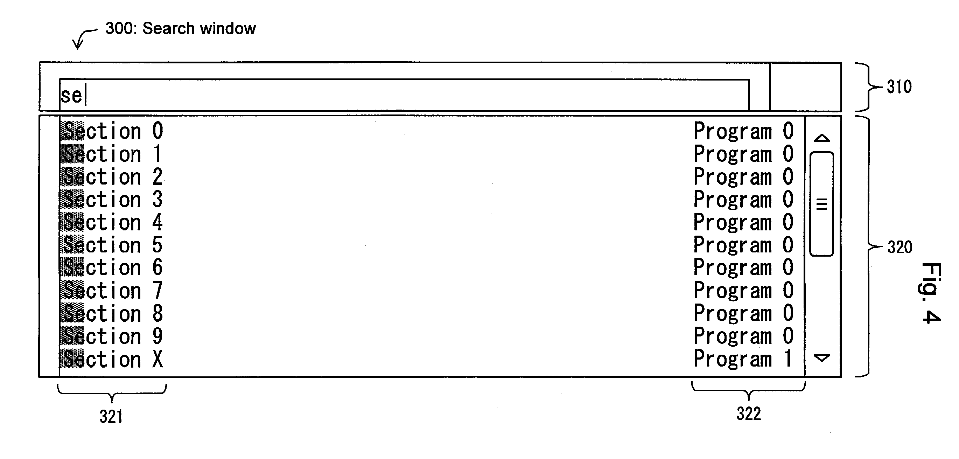

In one example, the operation unit 120 receives an operation to display a search window 300 shown in Fig. 4. The operation reception unit 111 then outputs an instruction to display the search window 300 on the display 140 to the display control unit 113. This will be described in detail below.

Subsequently, the operation unit 120 receives an operation to input a character (or characters) to be retrieved (input characters) into a character input area 310 included in the search window 300 shown in Fig. 4. The operation reception unit 111 then outputs an instruction to retrieve group names (design category names) matching the input characters to the search unit 112.

The operation unit 120 receives an operation to select one of the group names appearing as the search results in a search result list 320 (refer to Fig. 4) in the search window 300. The operation reception unit 111 then outputs, to the second display control unit 1132, an instruction to display the editing image 232 (shown in Fig. 5) for editing target data included in the group with the selected group name on the display 140.

The search unit 112 includes the group name retrieval unit 1121 and a parent group name obtaining unit 1122. The group name retrieval unit 1121 searches project data 131 stored in the storage unit 130 for a group name matching the input characters received from the operation reception unit 111. The group name retrieval unit 1121 retrieves one or more target group names including the input characters.

The project data 131 includes one or more projects including data to be used in the PLCs 2. The project data 131 stores, for each project, data included in each project classified into a plurality of groups that are managed hierarchically. The project data 131 further stores, for each project, information about the hierarchy of the groups included in each project and the name of each group.

The group name retrieval unit 1121 searches the project data 131 for information about the hierarchy and the names of the plurality of groups included in each of the one or more projects stored in the project data 131. The group name retrieval unit 1121 then retrieves group names including the input characters received from the operation reception unit 111 as target group names.

The parent group name obtaining unit 1122 searches the project data 131 for the name of a parent group (parent group name) containing the group with each target group name retrieved by the group name retrieval unit 1121. The parent group is located immediately above the group with the corresponding target group name. The search unit 112 associates each target group name retrieved by the group name retrieval unit 1121 with the corresponding parent group name obtained by the parent group name obtaining unit 1122, and provides this information to the display control unit 113 (specifically, the first display control unit 1131).

The display control unit 113 displays various information (image) including an editing image on the display 140. The display control unit 113 includes the first display control unit 1131 and the second display control unit 1132. The first display control unit 1131 displays the target group names retrieved by the search unit 112, together with the names of the corresponding parent groups located immediately above the groups with the retrieved target group names on the display 140. In one or more embodiments, the first display control unit 1131 may display the target group names with the corresponding parent groups on the display 140. More specifically, the first display control unit 1131 may display the target group names in correspondence with the parent group names containing the groups with the target group names and located one-level higher than (immediately above) the groups with the target group names on the display 140, without further displaying, for example, the names of grandparent groups located one-level higher than the parent groups. The user may intend to check the names of parent groups to obtain connections to the groups with the target group names. The names of the grand parent groups displayed in addition to the names of the parent groups may confuse the user, who may not easily determine the connections to the groups with the target group names.

When receiving an operation to select one of the target group names appearing on the display 140 from the first display control unit 1131, the second display control unit 1132 displays an editing image (e.g., the editing image 232 shown in Fig. 5) to allow editing of data included in the groups with the target group names on the display 140.

### Data in Storage Unit

The storage unit 130 stores programs executed by the support apparatus 100, namely, (1) control programs, (2) operating system (OS) programs, and (3) application programs (information processing programs) for implementing various functions. The storage unit 130 further stores (4) various data to be read when the application programs are executed. The programs and data (1) to (4) are stored in, for example, a nonvolatile storage device, such as a read-only memory (ROM), a flash memory, an erasable programmable ROM (EPROM), an electrically EPROM (EEPROM) (registered trademark), and a hard disc drive (HDD). The storage unit 130 further stores the project data 131.

The project data 131 stores one or more projects used in the PLCs 2. The project data 131 stores, for each project, data included in the project, the groups into which the data is classified, the names of the groups (e.g., the details of the ladder program contained in the group named Section 0), the hierarchy of the groups (e.g., the hierarchy including different levels including the project, the program located immediately below the project, and the section located immediately below the program). A level immediately below another level herein refers to a level one-level lower than the other level.

A main window 200 appears on the display 140 of the support apparatus 100 when the user generates a project including data to be used in the PLCs 2a to 2d using the support apparatus 100. The main window 200 will now be described. The project includes sets of data intended for the respective PLCs 2a to 2d. When receiving an input to select one of the PLCs 2a to 2d and an input to select one set of data, the display control unit 113 displays an editing image for editing the selected one set of data intended for the selected PLC 2 on the display 140.

### Main Window

Fig. 3 is a diagram describing the main window 200 in one example appearing on the display 140 as controlled by the display control unit 113 included in the support apparatus 100. In particular,

Fig. 3 is a diagram describing a user interface appearing on the display 140 of the support apparatus 100 when the user generates a project including data to be used in the PLCs 2 using the support apparatus 100. As shown in Fig. 3, the main window 200 includes a toolbar 210, and a navigation area 220 and an editing area 230 under the toolbar 210. The navigation area 220 allows the user to select target data for editing. The editing area 230 allows the user to edit programs and other data.

The navigation area 220 includes a PLC selection area 221 and a design category menu area 222 (hereafter, simply referred to as a menu area 222). The PLC selection area 221 is used to select one of the PLCs 2. The design category menu area 222 displays a plurality of design categories (EtherCAT, CPU/Expansion Racks, and others categories) in a tree structure for selecting data associated with device structures and setups (Configuration and Setup in Fig. 3) and data associated with programming (Programming in Fig. 3).

The menu area 222 displays connections between groups including data used in the PLC 2 selected in the PLC selection area 221 in a tree structure using their group names. The menu area 222 displays the information resulting in searching the project data 131 performed by the control unit 110.

More specifically, Configuration and Setup in the menu area 222 contains design category names (group names) to be used in designing devices for configuring an intended control system 1 in a hierarchy (in a tree structure in the figure). Programming in the menu area 222 contains design category names (group names) to be used in designing programs for configuring the intended control system 1 in a hierarchy (in a tree structure in the figure). Hereafter, the highest level is referred to as a first level, and levels subsequent to the first level are sequentially referred to as a second level, a third level, etc.

When, for example, the group name (design category name) POUs in Programming in the menu area 222 is the group name at the first level, the group name at the second level is Programs. The group (design category) named Programs contains groups at the third level named System Definition, Input, ErrWatch, and others. The third-level group named System Definition contains the group at the fourth level named SystemDef. Similarly, the third-level group named Input contains groups at the fourth level named Hardswitch Input Accept, NS_Setting Input, Axis System Variable Input, and others. In the present embodiment, the fourth level corresponds to the section (the lowest level). Hereafter, the levels are separated by symbol ¥ to identify each group name.

When NJ501_1 representing one PLC 2 is selected in the PLC selection area 221, the display control unit 113 included in the support apparatus 100 hierarchically displays the names of groups including data used in the PLC 2 identified with NJ501_1 in the menu area 222. When the user selects the design category name 2221 (Axis System Variable Input) contained in the group named POUs¥Programs¥Input, from the plurality of groups names appearing in the menu area 222, the display control unit 113 included in the support apparatus 100 displays an editing image 231 for editing target data included in the group with the group name (design category name) Axis System Variable Input in the editing area 230. The editing image 231 is used to edit the ladder program (data used in the PLC 2) corresponding to the program named Axis System Variable Input. The ladder program is generated by the user in advance.

The display control unit 113 included in the support apparatus 100 displays the editing image (e.g., the editing image 231) with a tab in the editing area 230. For example, the tab of the editing image 231 is used to edit data included in the group named Axis System Variable Input. Each tab (each editing image) displays, as its tab name, the name of a group (group name) including editable data in each editing image. Fig. 3 shows the editing image 231 that has been scrolled down by the user from the initial state of the editing image 231 (where data is displayed sequentially in the order of the rung numbers 1, 2, 3, etc.).

The user can select one set of data from sets of editable data included in the ladder program by operating an operation key, a mouse, or another input device on the editing image 231. Fig. 3 shows the editing image in which the user has selected instruction identification information 2311 (X1_Axis.Details.InHome) with the rung number 9. The instruction identification information is information for identifying an input instruction or an output instruction at each rung.

As described above, the display control unit 113 included in the support apparatus 100 uses group names (e.g., design category names, such as section names) and displays connections between the groups (design categories), such as subprograms (sections) used in designing programs, in a tree structure. The display control unit 113 in the support apparatus 100 hierarchically displays design category names (group names) to be used in designing devices for configuring the control system 1, in addition to the design category names to be used in designing programs.

In Fig. 3, for example, the group with the group name Configuration and Setup (design category name) in the menu area 222 contains groups named EtherCAT, CPU/Expansion Racks, I/O Map, Controller Setup, Motion Control Setup, Cam Data Settings, and other groups located immediately below the group named Configuration and Setup.

Using the editing image for EtherCAT, for example, the user can set a master and a slave for EtherCAT, and can also edit the detailed settings of the master and the slave. Using the editing image for CPU/Expansion Racks, the user can design a unit structure to be connected to CPU racks or to expansion racks, and can also set highly functional units. The editing image for I/O Map displays Read/Write attributes and the data type of an I/O port of each unit. Using this editing image, the user can assign a variable to the port. Using the editing image for Controller Setup, the user can perform settings associated with the operation of the controller. The groups located immediately below the group named Controller Setup are the operation setting group for setting the operations of the PLC function module, such as the power-on mode, the routing table, and the settings for changing the criticality of an abnormality in the controller, and the built-in EtherNet/IP port setting group for setting communication using the built-in EtherNet (registered trademark) /IP port in the controller. Using the editing image for Motion Control Setup, the user can register an axis used for a motion instruction, and can associate the axis with a servo driver and an encoder used by the axis, and can set parameters for the axis. Using the editing image for Cam Data Settings, the user can perform the settings for generating data associated with an electric cam. Using the editing image for Task Setting, the user can set tasks, in which the program is to be executed (not shown). More specifically, the user can set the cycles and timings for executing tasks, the program to be implemented in units of tasks, and I/O refresh to be performed in the tasks, and can also define variable that are shared between the tasks.

For example, the group named Cam Data Settings contains the groups named V_Y, V_Z, EOU_Y, and other groups located immediately below the group named Cam Data. Although not shown, the group named EtherCAT contains the group including a master and a slave that are set with EtherCAT located immediately below the group named EtherCAT.

As described above with reference to Fig. 3, the display control unit 113 included in the support apparatus 100 classifies data used in the PLC 2 into a plurality of groups (design categories) that are managed hierarchically, and displays connections between the groups using their group names (design category names) in a tree structure. As described above, the support apparatus 100 stores the data used in the PLC 2 in the project data 131 stored in the storage unit 130 with the same management method (structural management) used to display the data on the main window 200.

When detecting an operation (e.g., pressing the Ctrl+Shift+S key) to call the function of searching for a group name (design category name) in the main window 200 described above appearing on the display 140, the search unit 112 included in the support apparatus 100 displays the search window 300 on the display 140.

### Search Window

Fig. 4 is a diagram describing search results in one example in searching using "se" as characters to be retrieved (input characters) appearing in the search window 300 on the display 140 as controlled by the display control unit 113 included in the support apparatus 100. As shown in Fig. 4, the search window 300 includes the character input area 310 for receiving characters input by the user, and the search result list 320 listing the search results in searching using the input characters in the character input area 310. The search result list 320 includes a target group name display area 321 for displaying the target group names retrieved by the search unit 112 based on the input characters, and a parent group name display area 322 for displaying the names of parent groups containing the groups with the target group names and located immediately above the groups with the target group names. As shown in Fig. 4, the target group names retrieved based on the input characters are associated with the names of the parent groups (parent group names) containing the groups with the target group names. The search result list 320 in the search window 300 shown in Fig. 4 includes Section 0-Program 0, Section 1-Program 0, Section 2-Program 0, and Section X-Program 1 as the search results based on the input characters "se" in the character input area 310. In other words, the display control unit 113 displays the groups named Sections 0 to 9 in correspondence with their parent group named Program 0, and also displays the group named Section X in correspondence with its parent group named Program 1 in the search result list 320.

### Search Window Overview

For easier understanding of the search window 300 provided by the display control unit 113 included in the support apparatus 100, a method for using the search window 300 by the user will now be described.

The user inputs a part of the group name of the group to be displayed in the character input area 310 of the search window 300. The search unit 112 then performs a search process. The first display control unit 1131 included in the support apparatus 100 displays a display category in the main window 200 (e.g., a group name displayed in the menu area 222) in the search result list 320. The display category includes a character string (input characters) input in the character input area 310. The search result list 320 includes the search results (target group names) arranged sequentially from the top in the same order as in the main window 200 (particularly in the menu area 222). The search result list 320 further includes the names of the parent groups containing the groups with the target group names and located immediately above the groups with the target group names, together with the search results (target group names).

When receiving an operation to select one of the search results (target group names) displayed in the search result list 320 (an operation to double-click on a search result or an operation to press the enter key to select a search result), the second display control unit 1132 included in the support apparatus 100 displays an editing image (e.g., the editing image 232) for editing the group (design category) corresponding to the selected search result (target group name) in the editing area 230.

The support apparatus 100 thus allows the user to retrieve the group name including data to be displayed in the editing area 230 from the group names (design category names) displayed in the menu area 222. For example, the support apparatus 100 can promptly display target programs and sections when the menu area 222 includes many programs and many sections.

The processing performed by the support apparatus 100 in a specific example when the user searches for a group name will now be described. In the example described below, the user searches for a section name. The same processing is performed when, for example, the user searches for a cam definition.

### Search Method

In one example, "test" is input into the character input area 310 as the input characters. The first display control unit 1131 included in the support apparatus 100 then displays group names (e.g., section names) including "test," such as TestProgram ("Test"Program, where the quoted characters are the input characters) and LadderTest (Ladder"Test"), as search results included in the target group name display area 321 of the search result list 320. In another example, "te2" is input as the input characters. The first display control unit 1131 then displays group names such as TestProgram2 ("Te"stProgram"2") and LadderTest2 (Ladder"Te"st"2") in the target group name display area 321.

The search method used by the support apparatus 100 will now be described in detail. The search unit 112 (specifically, the group name retrieval unit 1121) searches the project data 131, and retrieves group names including the input character(s) from the group names included in one or more projects stored in the project data 131. More specifically, the search unit 112 retrieves group names including the first letter matching the input character, a capital letter matching the input character, a double-width character matching the input characters, and a number matching the input character. When a plurality of characters are input, the search unit 112 performs the above search using each of the input characters sequentially from the first character and narrows the group names to be retrieved.

With this search method, the input character(s), such as I ("I"nitialSetting0), InS ("In"itial"S"etting0), "0" (InitialSetting"0"), and IS0 ("I"nitial"S"etting"0"), are input into the character input area 310. The first display control unit 1131 included in the support apparatus 100 then displays the group name (design category name) InitialSetting0 in the target group name display area 321.

The search method described above allows the search unit 112 included in the support apparatus 100 (specifically, the group name retrieval unit 1121) to perform fuzzy search for the group name based on the input character(s) using, for example, numbers when the group names are written in various languages. The support apparatus 100 can thus continue projects used in the PLCs 2 managed between countries with different languages, without translating the group names from one language to another.

Additionally, the details of the retrieved targets may be displayed using the tooltip.

### Use of Search Results

Fig. 5 is a diagram describing the main window 200 in one example appearing on the display 140 as controlled by the display control unit 113 included in the support apparatus 100 when the user selects Section 0-Program 0 in the search result list 320 in the search window 300 shown in Fig. 4 (the target group name display area 321-the parent group name display area 322).

The search result list 320 in the search window 300 shown in Fig. 4 shows Section 0-Program 0, Section 1-Program 0, Section 2-Program 0, etc. When an operation is performed to select Section 0-Program 0, the second display control unit 1132 displays the editing image 232 for editing target data included in the group (section) named Section 0 included in the program named Program 0 on the display 140 as shown in Fig. 5.

The editing area 230 in the main window 200 shown in Fig. 5 displays the editing image 232 for editing data included in the group named Section 0, which is contained in the program named Program 0, with the tab name 232Name, which is Section 0-Program 0.

When further detecting an operation to call searching for a group name (category name) on the main window 200 shown in Fig. 5 appearing on the display 140, the display control unit 113 included in the support apparatus 100 displays the search window 300 again on the display 140.

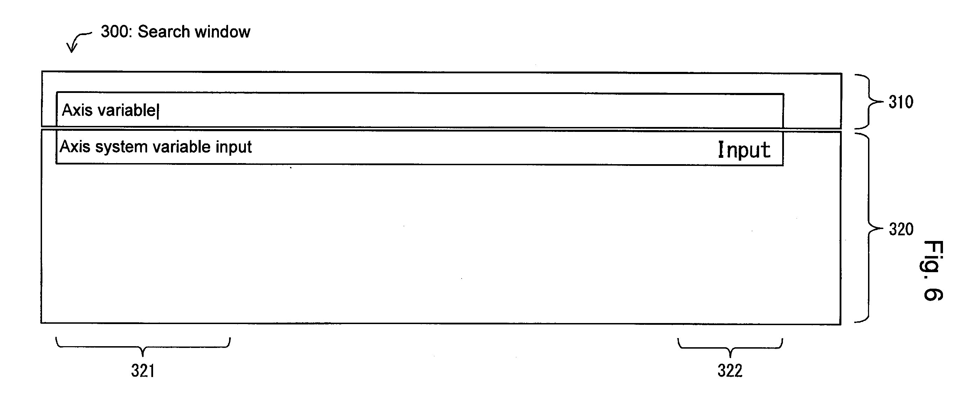

Fig. 6 is a diagram describing search results in one example in searching using the input characters "axis variable" in the search window 300 on the display 140 as controlled by the display control unit 113 included in the support apparatus 100.

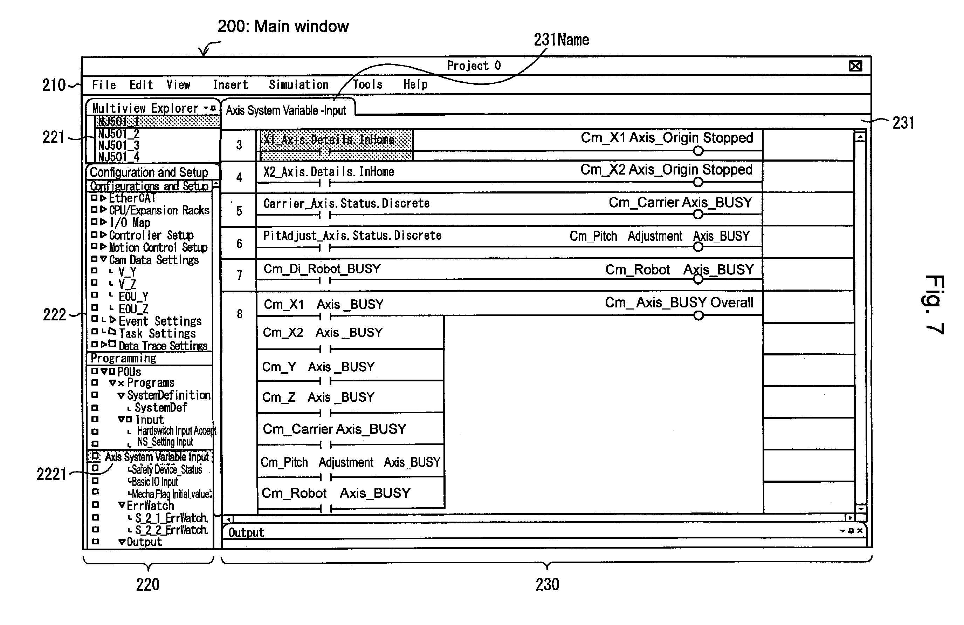

The search result list 320 in the search window 300 shown in Fig. 6 displays Axis System Variable Input-Input as the search result based on the input characters "axis variable" input into the character input area 310. As shown in the search result list 320 in Fig. 6, the group named Axis System Variable Input is contained in the group named Input located immediately above. When an operation is performed to select Axis System Variable Input-Input as shown in Fig. 7, the second display control unit 1132 displays the editing image 232 for editing data included in the group named Axis System Variable Input on the display 140.

Although Fig. 6 shows one example in which the design category name (group name) to be used in designing programs is retrieved, the group names (category names) that can be retrieved by the search unit 112 included in the support apparatus 100 are not limited to design category names to be used in designing programs. Retrieving design category names (group names) to be used in designing devices will now be described. When, for example, the character string "EOU" is input in the character input area 310 in the search window 300 shown in Fig. 4, the first display control unit 1131 displays the search results EOU_Y and EOU_Z in the target group name display area 321. The first display control unit 1131 additionally displays the group named Cam Data Settings in the parent group name display area 322. More specifically, the first display control unit 1131 displays the target groups names EOU_Y and EOU_Z in correspondence with the group name (parent group name) Cam Data Settings, which is the name of the group containing the groups named EOU_Y and EOU_Z and located immediately above these groups.

Fig. 7 is a diagram describing the main window 200 in one example appearing on the display 140 as controlled by the display control unit 113 included in the support apparatus 100 when the user selects Axis System Variable Input-Input in the search window 300 shown in Fig. 6. The editing area 230 in the main window 200 shown in Fig. 7 displays the editing image 231 for editing data included in the group named Axis System Variable Input having the tab name 231Name, which is Axis System Variable Input-Input.

### Processing by Support Apparatus

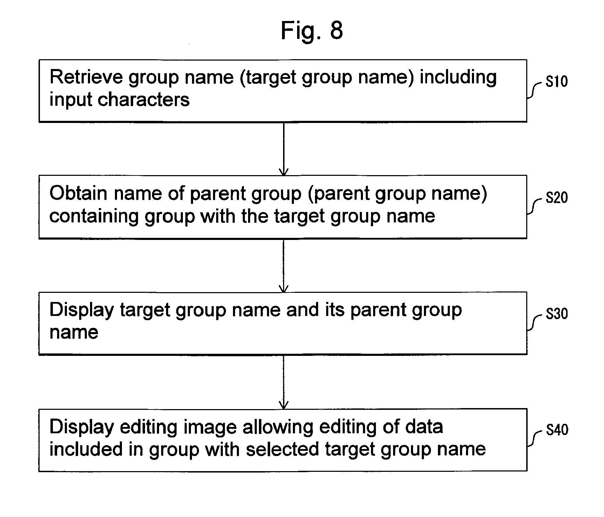

The overview of the processing performed by the support apparatus 100 described above will now be provided. Fig. 8 is a flowchart showing the processing performed by the support apparatus 100.

As shown in Fig. 8, when input characters are input into the character input area 310 in the search window 300, the group name retrieval unit 1121 included in the support apparatus 100 first searches the project data 131 and retrieves (obtains) the group names (target group names) including the input characters. The parent group name obtaining unit 1122 then obtains the names of parent groups (parent group names) containing the groups with the target group names (S20). Subsequently, the first display control unit 1131 displays the target group names in correspondence with the parent group names in the search result list 320 of the search window 300 (S30). The second display control unit 1132 may receive an operation to select one of the target group names appearing in the search result list 320 in the search window 300. The second display control unit 1132 then display editing images (e.g., the editing images 231 and 232) for editing target data included in the group with the selected target group name on the display 140 (S40).

To sum up, the information processing method implemented by the support apparatus 100 is an information processing method for an information processing apparatus that generates projects including data to be used in the PLCs 2 (controllers). The data is classified into a plurality of groups that are managed hierarchically. The method includes a search process (S10) for retrieving the target group names, which are the names of groups each including an input character, a first display control process (S30) for displaying a display screen including the target group names retrieved in the search process and the names of the parent groups containing the groups with the target group names and located immediately above the groups with the target group names, and a second display control process (S40) for displaying a display screen allowing editing of data included in the group with the selected target group name when receiving an instruction to select one of the target group names displayed in the first display control process. The information processing method implemented by the support apparatus 100 allows the user to easily retrieve intended data (e.g., target data for editing) from the data used in the PLCs 2.

### Second Embodiment

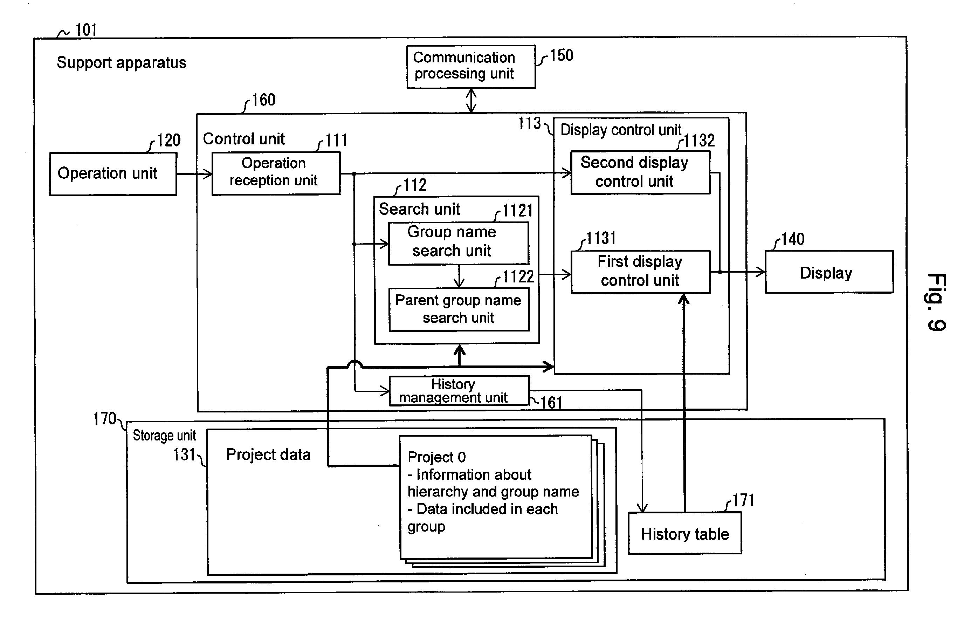

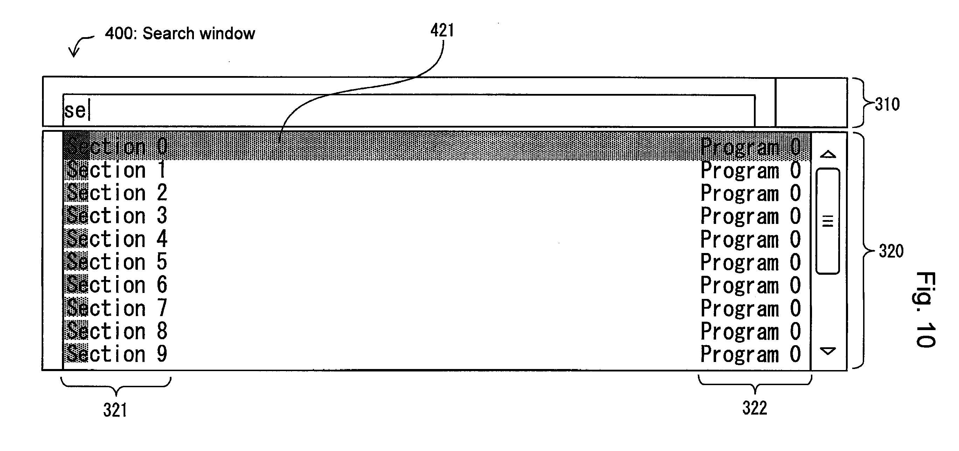

Another embodiment of the present invention will now be described with reference to Figs. 9 and 10. For ease of explanation, the components having the same functions as the components described in the above embodiments are given the same reference numerals as those components, and will not be described.

Fig. 9 is a block diagram showing the main components of the support apparatus 101 (information processing apparatus) according to a second embodiment of the present invention.

As shown in Fig. 9, the support apparatus 101 includes a history management unit 161 in addition to the components of the support apparatus 100 shown in Fig. 1. When an operation is performed to close the display screen allowing editing of target data used in the PLCs 2 (controllers), the history management unit 161 included in the support apparatus 100 stores the group names of groups including the data into a storage unit 170. When the search unit 112 retrieves a plurality of group names, the first display control unit 1131 displays the plurality of group names in such a manner that a predetermined number of latest target group names stored into a storage unit 170 by the history management unit 161 are displayed with a higher priority than other group names retrieved by the search unit 112. The display screen allowing editing of data in the PLCs 2 may include, for example, the editing images 231 and 232.

In the support apparatus 101 with the above-described structure, the first display control unit 1131 displays the predetermined number of latest target group names stored into the storage unit 170 by the history management unit 161 with a higher priority than other target group names. The predetermined number of (e.g., ten) latest target group names stored into the storage unit 170 by the history management unit 161 are the group names of groups including editable data in the most recent ten display screens for which an operation to close the screen has been performed. In other words, the group names of the predetermined number of latest group names stored into the storage unit 170 by the history management unit 161 may be the group names of groups including data that is likely to have been edited by the user before a predetermined number of (e.g., ten) most recent editing operations performed by the user. The user can thus more easily retrieve the group names of groups including data edited before the predetermined number of editing operations, and can improve the work efficiency in designing devices and programs.

When an operation is performed to close an editing image for editing one set of data used in the PLCs 2 (e.g., the editing image 232 for editing data included in the group (section) named Section 0), the history management unit 161 stores the group name of the group including the data into a history table 171 stored in the storage unit 170.

The storage unit 170 stores the history table 171, in addition to the data stored in the storage unit 130 included in the support apparatus 100 shown in Fig. 1. The history table 171 stores the names (group names) of groups (e.g., design categories including sections) including editable data in an editing image closed by the user. When, for example, an operation is performed to close the editing image 232 for editing target data included in the group named Section 0 included in the program named Program 0, the history management unit 161 performs the processing described below. More specifically, the history management unit 161 stores the group name Section 0 into the history table 171, together with information about the time and date when the operation to close the editing image 232 for editing the data included in the group named Section 0 is performed. The history management unit 161 stores the group names of groups including editable data in the editing image into the history table 171, together with the information about the time and date when the editing image is closed. For example, the target group names may be arranged in the search result list 320 in the order chronologically closer to when their editing image is closed.

Displaying a plurality of target group names retrieved by the search unit 112 in such a manner that a predetermined number of latest group names stored into the storage unit 170 by the history management unit 161 are displayed for selection with a higher priority than other target group names retrieved by the search unit 112 refers to, for example, displaying the group names in the manner described below. The predetermined number of group names retrieved by the search unit 112 and stored into the storage unit 170 by the history management unit 161 may be displayed in a manner distinguishable from the other target group names by using, for example, inverted displays, highlighted displays, lamp displays, different color displays, or flash displays. The predetermined number of latest group names retrieved by the search unit 112 and stored into the storage unit 170 by the history management unit 161 may be displayed at higher locations in the search result list display area (at upper positions displayed earlier) than the other target group names.

Fig. 10 is a diagram describing search results in one example in searching using the input characters "se" in a search window 400 on the display 140 as controlled by the display control unit 113 included in the support apparatus 101. As shown in Fig. 10, the search window 400 differs from the search window 300 shown in Fig. 4 in the manner described below. The search result list 320 (the target group name display area 321-the parent group name display area 322) in the search window 400 shown in Fig. 10 displays Section 0-Program 0 in a highlighted manner. In other words, the program named Section 0-Program 0 is emphasized with a highlight 421.

When, for example, the user closes the editing image 232 for editing data included in the section named Section 0 in the program named Program 0, the history management unit 161 stores the group name Section 0 into the history table 171 together with information about the time and date when the editing image 232 is closed.

The first display control unit 1131 searches the history table 171, and determines whether the retrieved group names provided from the search unit 112 match any of a predetermined number of (e.g., ten) latest group names stored in the history table 171. More specifically, the first display control unit 1131 obtains the predetermined number of latest group names from the groups stored in the history table 171 in the order chronologically closer to the date and time when the groups are stored. The first display control unit 1131 then compares each of the target group names provided from the search unit 112 with the predetermined number of group names. When determining that any target group name matches one of the predetermined number of latest group names stored in the history table 171, the first display control unit 1131 displays the target group name(s) matching any of the predetermined number of latest group names stored in the history table 171 with a higher priority than other target group names. More specifically, the first display control unit 1131 displays the predetermined number of latest group names of the retrieved groups stored in the history table 171 emphasized with a highlight 421 in the search result list 320.

As described above, the support apparatus 101 displays the group names of groups including editable data in the predetermined number of (e.g., ten) most recent display screens for which the operation has been performed to close the display screens with a higher priority than other target group names. This allows the user to more easily retrieve the group names of groups including data edited before several recent editing operations, and improves the work efficiency in designing devices and programs.

When the search unit 112 retrieves a plurality of target group names, the first display control unit 1131 may display the target group names in such a manner that the target group names retrieved by the search unit 112 and stored into the storage unit 170 in a predetermined past period by the history management unit 161 are displayed with a higher priority than other group names retrieved by the search unit 112.

### Third Embodiment

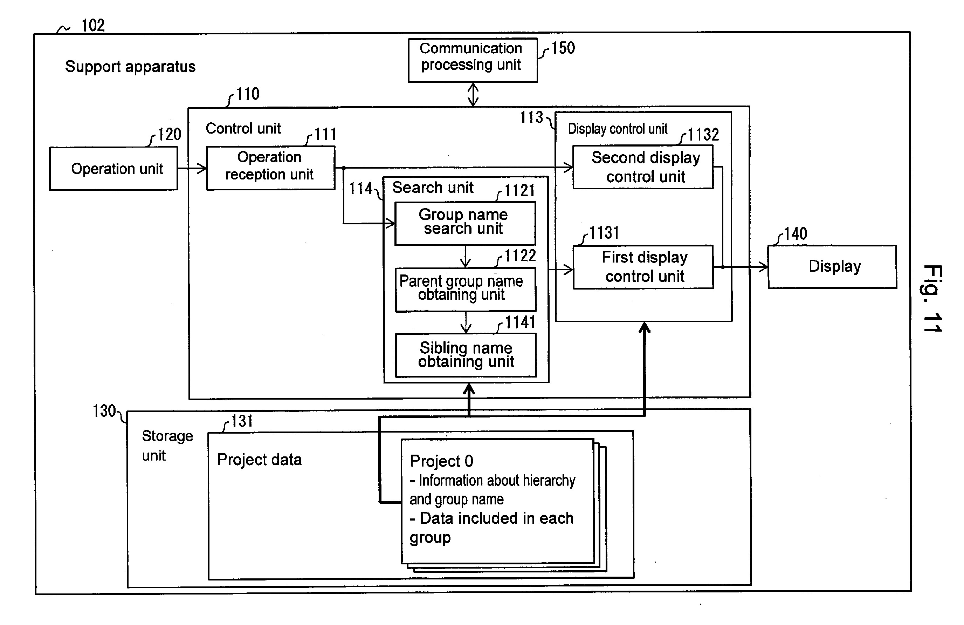

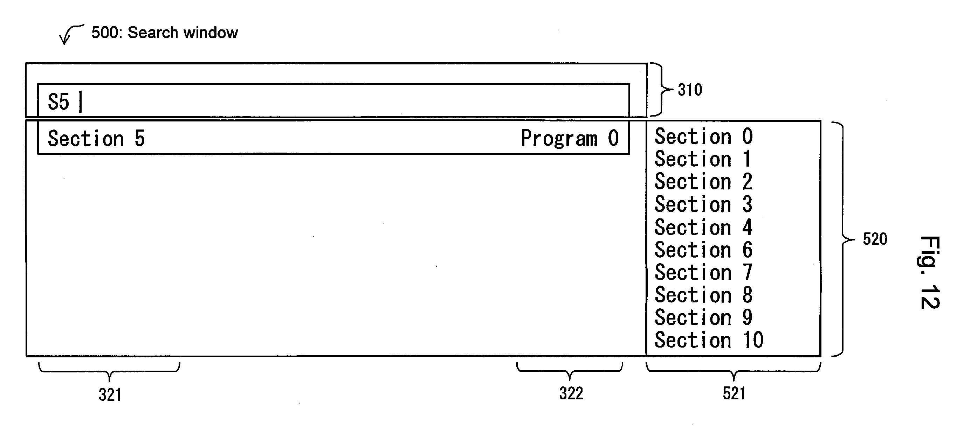

Another embodiment of the present invention will now be described with reference to Figs. 11 and 12. For ease of explanation, the components having the same functions as the components described in the above embodiments are given the same reference numerals as those components, and will not be described.

The overview of a support apparatus 102 (information processing apparatus) according to a third embodiment of the present invention will now be described. A first display control unit 1131 included in the support apparatus 102 displays, together with the target group names, the names of sibling groups located immediately below the parent groups and other than groups with the target group names.

The support apparatus 102 with the above-described structure searches based on input characters input into the character input area 310 in a search window 500 (described later), and displays the search results or the names of sibling groups (sibling group names) in a search result list 520, together with the target group names. When, for example, a section name or a cam definition name is input into the search window 500 as input characters, the first display control unit 1131 included in the support apparatus 102 displays the section name or the cam definition name as the target group name in the search result list 520, and also displays a list of other section names or other cam definition names located at the same level as the target section name or the target cam definition name.

The support apparatus 102 can thus provide information about the sibling group names to the user, together with the target group names. This allows the user to easily check the group names associated with the target group names.

Fig. 11 is a block diagram showing the main components of the support apparatus 102. As shown in Fig. 11, the support apparatus 102 differs from the support apparatus 100 shown in Fig. 1 in the manner described below. A search unit 114 included in the support apparatus 102 includes a sibling group name obtaining unit 1141, in addition to the group name retrieval unit 1121 and the parent group name obtaining unit 1122 included in the support apparatus 100.

The sibling group name obtaining unit 1141 searches the project data 131, and performs the processing described below. The sibling group name obtaining unit 1141 first obtains the names of parent groups (parent group names) containing the groups with the target group names obtained by the group name retrieval unit 1121 and located immediately above these groups. The sibling group name obtaining unit 1141 then obtains the names of sibling groups (sibling group names) located immediately below the parent groups, contained in the parent groups, and other than the groups with the target group names.

The sibling group name obtaining unit 1141 may obtain the parent group names from the parent group name obtaining unit 1122 and may search the project data 131 to obtain the names of sibling groups located immediately below the groups (parent groups) with the parent group names and contained in the parent groups, and other than the groups with the target group names.

The search unit 114 associates the target group names obtained by the group name retrieval unit 1121, the parent group names obtained by the parent group name obtaining unit 1122, and the sibling group names obtained by the sibling group name obtaining unit 1141 with one another, and provides this information to the display control unit 113 (specifically, the first display control unit 1131). The first display control unit 1131 associates the target group names, the parent group names, and the sibling group names provided from the search unit 114 with one another, and displays this information in the search result list 520 in the search window 500.

Fig. 12 is a diagram describing search results in one example in searching using the input characters "S5" in the search window 500 on the display 140 as controlled by the display control unit 113 included in the support apparatus 102. As shown in Fig. 12, the search result list 520 in the search window 500 differs from the search result list 320 shown in Fig. 4 in that the search result list 520 includes a sibling group name display area 521, in addition to the target group name display area 321 and the parent group name display area 322. The sibling group name display area 521 displays groups located immediately below the parent group appearing in the parent group name display area 322 (that is, the groups located at the same level as the group with the target group name) and contained in this parent group and other than the group with the target group name. The sibling group name display area 521 may display all the groups located immediately below the parent groups appearing in the parent group name display area 322 and contained in these parent groups. In other words, the target group names may appear in both the target group name display area 321 and the sibling group name display area 521. The first display control unit 1131 included in the support apparatus 102 may thus display the target group names, the parent group names, and the sibling group names in correspondence with one another.

When, for example, the program named Program 0 contains groups named Section 1, Section 2, and Section 3 to Section 10, and the characters "S5" are input into the character input area 310 in the search window 500, the first display control unit 1131 included in the support apparatus 102 displays the information described below on the display 140. More specifically, the group name retrieval unit 1121 obtains the group name Section 5 including the input characters "S5" as the target group name. The parent group name obtaining unit 1122 obtains the name of the parent group (program) Program 0 for the group (section) named Section 5. The sibling group name obtaining unit 1141 then obtains the names of the sibling groups (sections) named Section 1, Section 2, and Section 3 to Section 10, which are other than the group named Section 5 contained in the program named Program 0. In this case, the first display control unit 1131 included in the support apparatus 102 displays Section 5 in the target group name display area 321 and Program 0 in the parent group name display area 322, and displays Section 1, Section 2, and Section 3 to Section 10 in the sibling group name display area 521 in the search result list 520. As described above, the first display control unit 1131 may display Section 5 also in the sibling group name display area 521.

When receiving an instruction to select one of the sibling group names appearing on the display 140 (particularly in the search result list 520 of the search window 500), the second display control unit 1132 included in the support apparatus 102 displays an editing image for editing data included the group with the selected sibling group name on the display 140.

When, for example, an operation is performed to select Section 0 appearing in the sibling group name display area 521 in the search result list 520 shown in Fig. 12, the second display control unit 1132 included in the support apparatus 102 displays a display screen allowing editing of data included in the group (section) named Section 0 contained in the program named Program 0. The display screen allowing editing of data included in the group (section) named Section 0 is, for example, the editing image 232.

The support apparatus 102 allows the user to promptly access the display screen (e.g., the editing image 232) allowing editing of data (data included in Section 0) associated with intended data (data included in Section 5) with a simple operation, and improves the user's work efficiency in generating projects.

### Implementations Using Software

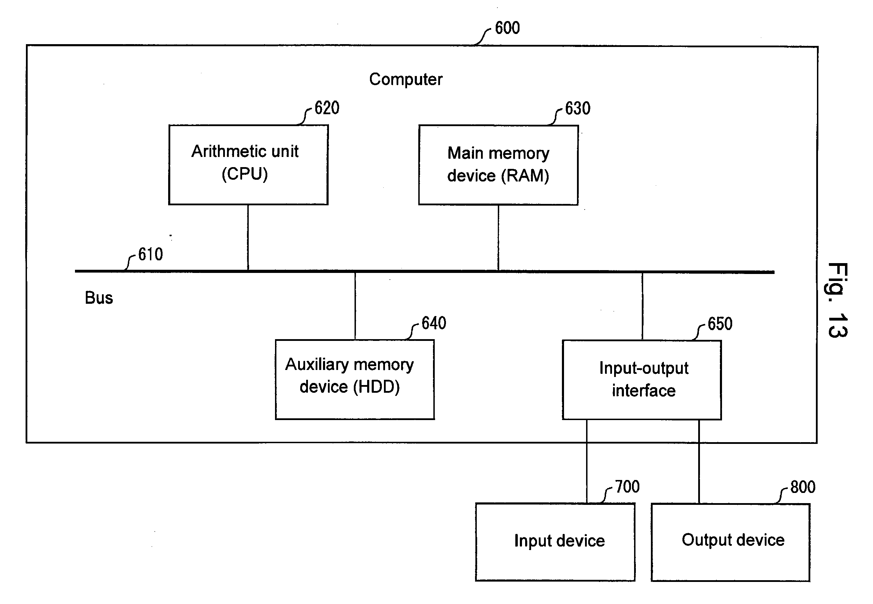

Each functional block of the support apparatuses 100, 101 and 102 may be achieved using a logic circuit (hardware) such as an integrated circuit (IC chip), or using software implemented by a central processing unit (CPU). When the functional blocks are achieved by using software, the support apparatuses 100,101, and 102 may be formed by a computer (electronic computer) shown in Fig. 13.

Fig. 13 is a block diagram showing a computer that can function as the support apparatus 100, 101, or 102.

As shown in Fig. 13, a computer 600 includes an arithmetic unit 620, a main memory device 630, an auxiliary memory device 640, and an input-output interface 650, which are connected to one another with a bus 610. Each of the arithmetic unit 620, the main memory device 630, and the auxiliary memory device 640 may be a CPU, a random access memory (RAM), or a hard disk drive. The main memory device 630 may be any computer-readable tangible medium that is non-transitory, such as a tape, a disk, a card, a semiconductor memory, and a programmable logic circuit.

An input device 700 and an output device 800 are connected to the input-output interface 650. The input device 700 and the output device 800 included in each of the support apparatus 100, 101, and 102 transmit and receive data to and from another server or another apparatus. The input device 700 and the output device 800 included in each of the support apparatus 100, 101, and 102 further receive sound or characters input from the user, and output sound to the user.

The auxiliary memory device 640 stores programs to be executed by the computer 600 to function as the support apparatuses 100, 101, and 102. The arithmetic unit 620 expands each program stored in the auxiliary memory device 640 into the main memory device 630, and executes instructions included in each program expanded in the main memory device 630 to enable the computer 600 to function as the components of the support apparatuses 100, 101, and 102.

Although the computer 600 functions as the support apparatus using the programs stored in the auxiliary memory device 640, which is an internal storage medium, the programs may be stored in an external storage medium. The programs may be provided to the computer via any transmission media (such as communication networks or broadcast waves) that can transmit programs. One or more embodiments of the present invention may be implemented using programs that are electronically transmitted in the form of data signals carried by carrier waves.

### Modification

Although data used in the PLCs are ladder programs, global variables, and setup information for EtherCAT in the above embodiments, the data may be any data included in projects. For example, the data may be structured text. The structured text is a programming language designed for PLCs under IEC61131-3. In the structured text, a program is generated in text.

### Summary

An information processing apparatus (support apparatus 100, 101, or 102) according to a first aspect of the present invention is an information processing apparatus for generating a project including data to be used in a controller (PLC 2). The data is classified into a plurality of groups that are managed in a hierarchy. The apparatus includes a search unit (112), a first display control unit (1131), and a second display control unit (1132). The search unit retrieves at least one target group name including an input character. The target group name is a name of one of the plurality of groups. The first display control unit displays a first display screen including the at least one target group name retrieved by the search unit and a name of a parent group for the target group name. The parent group is located one-level higher in the hierarchy than a group with the target group name. The parent group contains the group with the target group name. The second display control unit displays, when receiving an instruction to select one of the at least one target group name displayed by the first display control unit, a second display screen allowing editing of data included in a group with the selected target group name.

The information processing apparatus with the above-described structure searches the names of the groups that are managed hierarchically, into which data used by the controller has been classified. The information processing apparatus displays, when receiving an operation to select one of the target group names appearing as the search results in the display screen, a display screen allowing editing of target data included in the group with the selected target group name. The editing of the data used by the controller includes, for example, designing a device or designing a program for configuring the control system including the controller. The information processing apparatus allows the user to easily retrieve target data for editing or for other processing from the data used by the controller. In other words, the user can promptly access the display screen allowing editing of the editing target data or other data with a simple operation. The information processing apparatus thus improves the user's work efficiency in generating projects. The information processing apparatus displays the target group name in correspondence with the name of its parent group in the display screen. This allows the user to easily retrieve an intended target group name and to easily check the parent group containing the group with the retrieved group name. When, for example, the group name of the target group for editing is similar to the group name of another group, the user can check the parent group for the target group and the parent group for the other group, and thus can avoid mistakenly selecting the other group.

An information processing apparatus (support apparatus 101) according to a second aspect of the present invention is the information processing apparatus of the first aspect of the invention further including a history management unit (161) that stores a group name of the group including the data into a storage unit in response to an operation to close the second display screen allowing editing of data. When the search unit retrieves a plurality of target group names, the first display control unit may display the plurality of group names retrieved by the search unit in such a manner that a predetermined number of latest group names stored into the storage unit by the history management unit are displayed with a higher priority than other target group names.

The information processing apparatus with the above-described structure displays the plurality of target group names retrieved by the search unit in such a manner that the predetermined number of latest target group names stored into the storage unit by the history management unit are displayed with a higher priority than other target group names. The predetermined number of (e.g., ten) latest target group names stored into the storage unit by the history management unit are the group names of groups including editable data in the most recent ten display screens for which an operation to close the screen has been performed. In other words, the group names of the predetermined number of latest group names stored into the storage unit by the history management unit may be the group names of groups including data that is likely to have been edited by the user before a predetermined number of (e.g., ten) most recent editing operations performed by the user. The user can thus more easily retrieve the group names of groups including data edited before the predetermined number of editing operations, and can improve the work efficiency in designing devices and programs.

An information processing apparatus (support apparatus 102) according to a third aspect of the present invention is the information processing apparatus of the first or second aspect of the invention in which the first display control unit (1131) may display, together with the target group name, a name of a sibling group that is located immediately below the parent group and is other than the group with the target group name.

The information processing apparatus with the above-described structure displays the sibling group name, together with the target group name. The information processing apparatus thus provides the sibling group name to the user, together with the target group name, and allows the user to easily check the group name associated with the target group name.

An information processing apparatus (support apparatus 102) according to a fourth aspect of the present invention is the information processing apparatus of the third aspect of the invention in which the second display control unit may display, when receiving an instruction to select a name of the sibling group displayed on the first display screen, a second display screen allowing editing of data included in the group with the selected sibling group name.

The information processing apparatus with the above-described structure displays, when an operation is performed to select the name of the sibling group, an editing image for editing data included in the group with the selected sibling group in the display screen. The information processing apparatus allows the user to promptly access the editing image for editing data (data included in the sibling group) associated with intended data (data included in the group with the target group name) with a simple operation, and improves the user's work efficiency in generating projects.

An information processing method according to a fifth aspect of the present invention is an information processing method implemented by an information processing apparatus for generating a project including data to be used in a controller. The data is classified into a plurality of groups that are managed in a hierarchy. The method includes a search process (S10), a first display control process (S30), and a second display control process (S40). The search process includes retrieving at least one target group name including an input character. The target group name is a name of one of the plurality of groups. The first display control process includes displaying a first display screen including the at least one target group name retrieved in the search process and a name of a parent group for the target group name. The parent group is located one-level higher in the hierarchy than the group with the target group name. The parent group contains the group with the target group name. The second display control process includes displaying, when receiving an instruction to select one of the at least one target group name displayed in the first display control process, a second display screen allowing editing of data included in a group with the selected target group name.

The above control method has the same advantageous effects as the information processing apparatus of the first aspect of the present invention.

The information processing apparatus according to each of the above aspects of the present invention may be achieved by a computer, which functions as each component (software component) of the information processing apparatus. An information processing program implemented by the information processing apparatus formed by the computer, and a computer-readable storage medium storing the information processing program fall within the scope of the invention.

The embodiments disclosed herein should not be construed to be restrictive, but may be modified within the spirit and scope of the claimed invention. The technical features disclosed in different embodiments may be combined in other embodiments within the technical scope of the invention. The technical features disclosed in the embodiments may further be combined to provide novel technical features.

### INDUSTRIAL APPLICABILITY

One or more embodiments of the present invention are applicable to an information processing apparatus connected to a controller for generating projects including data to be used in the controller.

### REFERENCE SIGNS LIST

- 2: PLC (controller)
- 100: support apparatus (information processing apparatus)
- 101: support apparatus (information processing apparatus)
- 102: support apparatus (information processing apparatus)
- 130: storage unit
- 140: display
- 170: storage unit
- 161: history management unit
- 231: editing target image (editing image)
- 232: editing target image (editing image)
- 1121: group name retrieval unit (search unit)
- 1131: first display control unit
- 1132: second display control unit
- 2221: design category name (group name)

## Claims

1. An information processing apparatus (100; 101; 102) for generating a project including data to be used in a controller (2), the data being classified into a plurality of groups that are managed in a hierarchy, the apparatus (100; 101; 102) comprising:
a search unit (112) configured to retrieve at least one target group name including an input character, the target group name being a name of one of the plurality of groups;
a first display control unit (1131) configured to display a first display screen (231) including the at least one target group name retrieved by the search unit (112) and a name of a parent group for the target group name, the parent group being located one-level higher in the hierarchy than a group with the target group name, the parent group containing the group with the target group name; and
a second display control unit (1132) configured to display, when receiving an instruction to select one of the at least one target group name displayed by the first display control unit (1131), a second display screen (232) allowing editing of data included in a group with the selected target group name.

2. The information processing apparatus (100; 101; 102) according to claim 1, further comprising:
a history management unit (161) configured to store a group name of the group including the data into a storage unit (130) in response to an operation to close the second display screen (232) allowing editing of data,
wherein when the search unit (112) retrieves a plurality of target group names, the first display control unit (1131) displays the plurality of group names retrieved by the search unit (112) in such a manner that a predetermined number of latest group names stored into the storage unit (130) by the history management unit (161) are displayed with a higher priority than other target group names.

3. The information processing apparatus (100; 101; 102) according to one of claims 1 and 2, wherein the first display control unit (1131) displays, together with the target group name, a name of a sibling group that is located immediately below the parent group and is other than the group with the target group name.

4. The information processing apparatus (100; 101; 102) according to claim 3, wherein
the second display control unit (1132) display, when receiving an instruction to select a name of the sibling group displayed on the first display screen (231), a second display screen (232) allowing editing of data included in the group with the selected sibling group name.

5. An information processing method implemented by an information processing apparatus (100; 101; 102) for generating a project including data to be used in a controller (2), the data being classified into a plurality of groups that are managed in a hierarchy, the method comprising:
retrieving (S10) at least one target group name including an input character, the target group name being a name of one of the plurality of groups;
displaying (S30) a first display screen (231) including the at least one target group name retrieved in the step (S10) of retrieving the target group name and a name of a parent group for the target group name, the parent group being located one-level higher in the hierarchy than the group with the target group name, the parent group containing the group with the target group name; and
displaying, when receiving (S40) an instruction to select one of the at least one target group name displayed in the step (S30) of displaying the first display screen, a second display screen (232) allowing editing of data included in a group with the selected target group name.

6. An information processing program enabling a computer (600) to function as the information processing apparatus (100; 101; 102) according to any of claims 1 to 4, the computer (600) functioning as
the search unit (112), the first display control unit (1131), and the second display control unit (1132).

7. A non-transitory computer-readable storage medium storing the information processing program according to claim 6.
